# DEMANDE DE BREVET EUROPEEN

(11) **EP 0 982 810 A1**
(43) Date de publication de la demande: **01.03.2000**
(21) Numéro de dépôt: 99402098.0
(22) Date de dépôt: 20.08.1999
(51) Int. Cl.: H01R 13/24

(54) **Dispositif antivandalisme pour lecteur de carte à puce**

(30) Priorité: 28.08.1998 FR 9810834
(71) Demandeur: FRAMATOME CONNECTORS INTERNATIONAL, 92400 Courbevoie (FR)
(72) Inventeur: Vuillemin, Laurent, 25520 Saint Gorgon Main (FR); Odic, Emmanuel, 25300 Pontarlier (FR)
(74) Mandataire: Somnier, Jean-Louis

(57) **Abrégé**

L'invention concerne un dispositif antivandalisme destiné à protéger un connecteur pour lecteur de carte à puce.

Selon l'invention, ledit dispositif comporte au moins deux plaques isolantes de protection recouvrant chacune au moins une rangée de lames de contact, chacune desdites plaques comportant, au-dessus de chaque lame (4), une fente (10) laissant passer uniquement la partie active (12) de la lame (4) qui est destinée à réaliser le contact électrique avec les plages conductrices du microcircuit de la carte à puce.

## Description

La présente invention concerne un dispositif destiné à protéger un connecteur pour lecteur de carte à puce contre le vandalisme et à empêcher l'utilisation d'une carte falsifiée, dans les publiphones par exemple.

Pour lutter contre le vandalisme, il convient d'escamoter les contacts électriques du lecteur de carte afin d'interdire l'introduction dans le connecteur de tout objet susceptible de les détériorer. A cet effet, une solution connue consiste à adopter pour lesdits contacts une forme arrondie sur le côté. Cette solution est en fait souvent difficile à mettre en oeuvre en raison du faible espace disponible dans le connecteur et de la taille des contacts.

Par ailleurs, une solution connue pour lutter contre l'usage de cartes falsifiées consiste à mesurer la résistance de contact juste après l'activation du contact de fin de course et avant l'autorisation de lecture/écriture. Ce contrôle est effectué lors d'une procédure qui n'autorise l'utilisation de la carte insérée dans le connecteur que si la résistance mesurée est inférieure à une valeur déterminée.

Or pour mesurer la valeur de la résistance, il est nécessaire de mesurer le courant circulant entre deux points de deux surfaces de contact non reliées pour pouvoir être à des potentiels électriques différents. De ce fait, la mise en oeuvre de cette solution sur les connecteurs classiques (comprenant un contact par plage de contact de microcircuit) n'est pas possible dans la mesure où le potentiel électrique est identique pour tous les points de la surface de contact d'une lame conductrice unique.

Ces connecteurs classiques sont habituellement munis de huit contacts selon la norme ISO ou AFNOR ou de seize pour répondre à la fois aux deux normes ISO et AFNOR.

Le but de la présente invention est de rendre les contacts électriques des connecteurs de lecteurs des cartes à puces inaccessibles de l'extérieur pour prévenir d'éventuelles tentatives de vandalisme, ceci quelle que soit la taille des contacts et l'espace disponible dans le connecteur.

Pour atteindre ce but, le dispositif de protection selon l'invention est caractérisé en ce qu'il comporte au moins deux plaques isolantes de protection recouvrant chacune au moins une rangée de lames de contact, chacune desdites plaques comportant, au-dessus de chaque lame, une fente laissant passer uniquement la partie active de la lame qui est destinée à réaliser le contact électrique avec les plages du microcircuit de la carte à puce.

Grâce à ces plaques, il n'est pas possible d'atteindre les lames de contacts du connecteur empêchant ainsi toute tentative de vandalisme.

Un autre but de l'invention consiste à adapter ces contacts pour pouvoir en mesurer la résistance lorsque la carte à puce est insérée dans le connecteur afin de contrôler la validité de cette dernière.

Ainsi, selon une autre caractéristique de l'invention, chaque lame de contact est scindée en deux lamelles conductrices séparées et susceptibles d'être mises à des potentiels électriques différents pour permettre la mesure de la résistance de contact de ladite lame.

Préférentiellement, lesdites plaques de protection sont séparées l'une de l'autre, et chacune de ces plaques est solidaire d'au moins une rangée de lames de contact et est montée mobile en rotation avec ladite rangée autour de deux pivots de manière à positionner tous les contacts à la même hauteur.

D'autres caractéristiques et avantages de l'invention ressortiront de la description qui va suivre, prise à titre d'exemple non limitatif, en référence aux figures annexées dans lesquelles:
- la figure 1 représente une vue en perspective d'un dispositif de protection d'un connecteur conforme à l'invention;

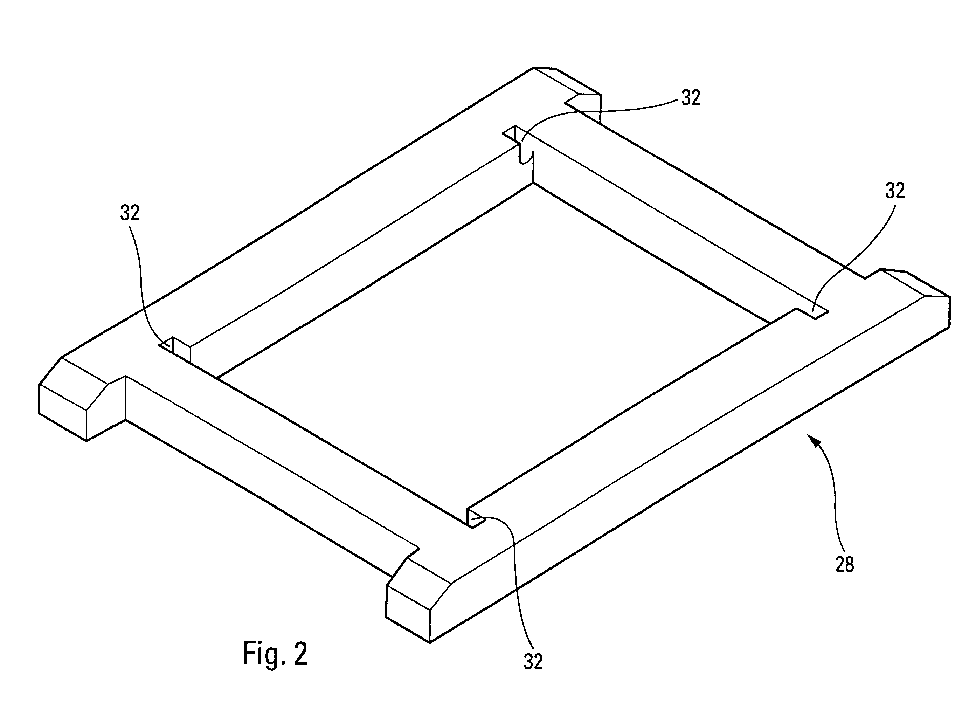

- la figure 2 représente une vue en perspective d'un cadre isolant destiné à supporter les contacts et le dispositif de protection de la figure 1.
- la figure 3 représente une vue en perspective du dispositif de protection de la figure 1 monté avec les contacts sur le cadre de la figure 2.

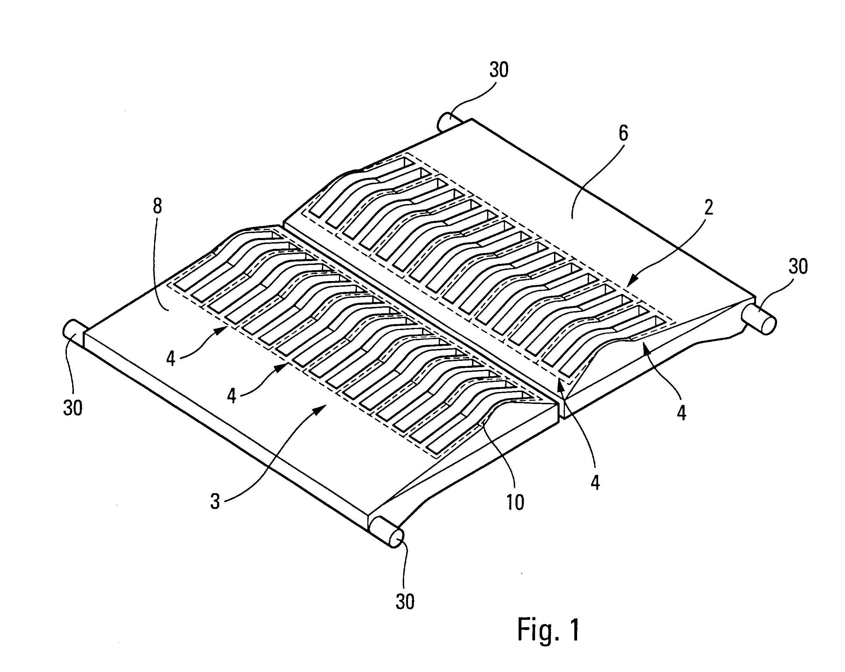

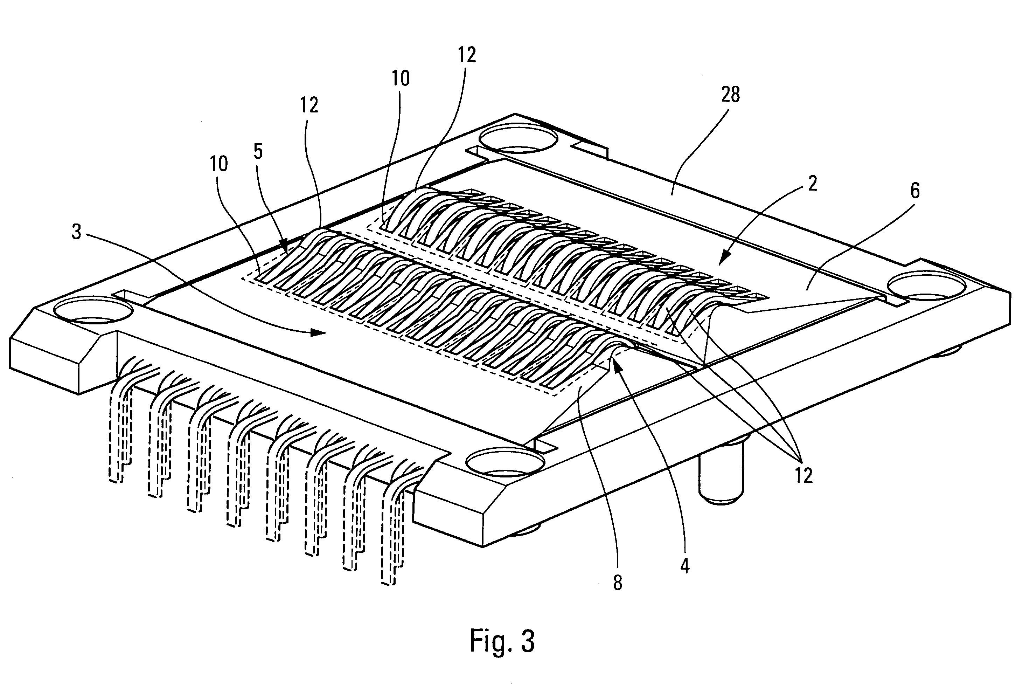

La figure 1 représente une vue d'un dispositif de protection 1 d'un connecteur pour lecteur de carte à puce comportant deux rangées 2 et 3 de fentes prévues pour laisser passer les lames de contacts 4. Ce dispositif comme on peut le voir sur les figures 1 et 3 comporte deux plaques isolantes 6, 8 recouvrant respectivement la rangée 2 et la rangée 3 de lames de contact 4 et comportant chacune, au-dessus de chaque lame 4 une fente 10 laissant passer uniquement la partie active 12 de la lame qui est destinée à réaliser le contact électrique avec une plage conductrice du microcircuit de la carte à puce. Lesdites plaques isolantes 6, 8 sont fixées par le dessous de façon à bien maintenir les lames de contact 4.

Préférentiellement, comme on peut le voir sur la figure 3 chaque lame de contact 4 est scindée en deux lamelles conductrices 5 séparées et susceptibles d'être mises à des potentiels électriques différents pour permettre la mesure de la résistance de contact. Chaque lamelle conductrice 5 présente une esquisse de forme de cuillère sur les parois latérales de la partie active, une partie légèrement arrondie formant la partie active 12 et une partie 14 formant un bras levier s'étendant en-dessous de la plaque de protection 6, 8. Ladite partie active 12 peut typiquement dépasser d'environ 0,3mm au-dessus de la plaque de protection 6, 8 tandis que ladite partie formant bras levier est recouverte par les plaques de protection 6, 8 destinées à l'empêcher de dépasser accidentellement.

Selon un mode préféré de réalisation de l'invention, illustré par les figures 1 et 3, lesdites plaques de protection 6, 8 sont séparées l'une de l'autre, et chacune de ces plaques est solidaire d'au moins une rangée 2, 3 de lames de contact 4. Cette structure est montée mobile en rotation, sur un cadre 28, autour de deux pivots latéraux 30 agencés respectivement sur deux extrémités opposées de chaque plaque. Des logements 32 sont prévus sur le cadre 28 pour recevoir lesdits pivots 30 ainsi que des chanfreins autour des plaques 6, 8 pour assurer la fonction antivandalisme de ces plaques par rapport au cadre 28. Les côtés opposés à ceux sur lesquels sont fixés les pivots 30 sont libres de manière à absorber les différences de niveau de la carte à puce garantissant ainsi une hauteur uniforme pour tous les contacts 4.

## Revendications

1. Dispositif antivandalisme destiné à protéger un connecteur pour lecteur de carte à puce, caractérisé en ce qu'il comporte au moins deux plaques isolantes (6, 8) de protection recouvrant chacune au moins une rangée (2, 3) de lames de contact (4), chacune desdites plaques (6, 8) comportant, au-dessus de chaque lame (4), une fente (10) laissant passer uniquement la partie active (12) de la lame qui est destinée à réaliser le contact électrique avec les plages conductrices du microcircuit de la carte à puce.

2. Dispositif selon la revendication 1, caractérisé en ce que chaque lame (4) de contact est scindée en deux lamelles conductrices (5) séparées et susceptibles d'être mises à des potentiels électriques différents pour permettre la mesure de la résistance de contact de ladite lame (4).

3. Dispositif selon la revendication 1, caractérisé en ce que lesdites plaques (6, 8) de protection sont séparées l'une de l'autre, et en ce que chacune de ces plaques (6, 8) est solidaire d'au moins une rangée (2, 3) de lames de contact (4) et est montée mobile en rotation dans un cadre (28) autour de deux pivots (20) latéraux de manière à positionner tous les contacts (4) à la même hauteur.

4. Dispositif selon la revendication 2, caractérisé en ce que chaque lamelle conductrice (5) présente la forme d'une cuillère sur les parois latérales de la partie active, une partie légèrement arrondie formant la partie active (12) et une partie (14) formant un bras levier s'étendant en-dessous de la plaque de protection (6, 8).

5. Lecteur de carte à puce caractérisé en ce qu'il comporte un dispositif conforme à l'une des revendications 1 à 5.
